# EUROPEAN PATENT APPLICATION

(11) **EP 1 596 620 A1**
(43) Date of publication of application: **16.11.2005**
(21) Application number: 04011555.2
(22) Date of filing: 14.05.2004
(51) Int. Cl.: H04Q 7/38

(54) **System and method for non-unique functional number processing in telecommunication applications**

(71) Applicant: Nortel Networks Limited, St.Laurent, Quebec H4S 2A9 (CA)
(72) Inventor: Altwein, Thomas, 88090 Immenstaad (DE); Beicht, Peter, 88682 Salem (DE); Del Grosso, Matteo, 88048 Friedrichshafen (DE); Currie, Darin, Ottawa ON K1Z 5B6 (CA); Longman, Timothy, Acton London W3 7TQ (GB)
(74) Representative: Winter, Brandl, Fürniss, Hübner Röss, Kaiser, Polte Partnerschaft Patent- und Rechtsanwaltskanzlei

(57) **Abstract**

The present invention provides a system for non-unique functional number processing in telecommunication applications, comprising a network node having a database for storing predetermined non-unique functional numbers, and an external data base for storing non-unique functional numbers in connection with uniqueness codes to thereby form unique functional numbers comprising the non-unique functional numbers and the uniqueness codes, wherein validation of an registration request at the network node is performed only if a functional number contained in the registration request corresponds to one of the predetermined functional numbers stored in the network node and if a combination of a uniqueness code contained in the registration request is associated with the functional number and if the functional number is not already stored in the database of the network node and does not correspond to one of the unique functional numbers stored in the external database. Furthermore, there is provided a corresponding method for non-unique functional number processing in telecommunication applications.

## Description

### Technical Field

The present invention relates to a system and a method for non-unique functional number processing in telecommunication applications and especially wireless mobile telecommunication applications such as Global System for Mobile Communication for Railways (GSM-R) applications.

### Background Art

Wireless mobile telecommunication services are now quite commonplace. There are in existence worldwide several wireless mobile telephony standards which are provided for general public use, by way of subscription or similar. Many advantages of wireless mobile telephony exist over standard fixed line Plain Old Telephone Services (POTS) telephony systems, the most significant being that the mobile telephone is mobile as such, provided that the use of a particular mobile telephone is made within a region covered by the operator to which a mobile subscriber is connected to.

Specialized mobile communication schemes are also becoming more frequently employed. A number of bodies are defining requirements and standards for utility mobile communication schemes for railway systems. These include the Mobile Radio for Railway Networks in Europe (MORANE) group, a consortium of European railway operators and equipment manufacturer with European Union (EU) funding who are defining a pan-European standard. The MORANE standard specifies extensions to the Global System for Mobile Communications (GSM) standard for application in the railways environment: Other bodies involved in specifying requirements or standards in this area include European Integrated Railway Radio Enhanced Network (EIRENE) and European Telecommunications Standards Institute (ETSI) itself. The term GSM-Railways (GSM-R) has been adopted as an umbrella term to cover all railway system schemes. For simplicity, in the description of the prior art and the present invention, reference shall be made to GSM-R systems and in particular to the EIRENE standard, but it is to be understood that the scope of the claims is not to be limited to such and is applicable to all telecommunication systems and especially wireless mobile telecommunication systems such as and GSM/GSM-R derivative systems.

In a GSM-railway network, communication is required between different user types such as person to person, person to system, system to system in different environments such as on the same train, from train to train, from/to ground to/from train, from ground to ground. The different user types need to be able to communicate with each other using special railway numbers, i.e. Functional Numbers (FN) which reflect functional information such as the train number the user is on, the function of the train such as goods or passenger, the function of the person who is assigned a particular GSM-R telephone etc. A central register, known as the Functional Home Location Register (HLRf) or Follow Me Functional Node (FN), stores the functional numbers and their related data. An access matrix function which provides means of checking which person can call another one, can be located on the central functional register. The intention is to enable GSM-R personnel and systems to use the functional number instead of the GSM Mobile Station ISDN (MSISDN) number for dialing and display purposes.

In order for this to work a service called "Follow Me" has been specified, which allows a Mobile Station (MS) user to register a temporarily assigned functional number against a temporarily assigned mobile station, and de-register the association once he no longer requires the functional number or the mobile station. For example when a train operator starts working on a train or in a station, he needs to be able to enter the functional number he has been assigned for the journey or for the day on the particular mobile station he is going to use, and have that association stored in a central register associated with the system. Any calls to the functional number need access to the central register to determine which mobile station the train operator is using and therefore where to route the call. The train operator needs to be able to check the status of the functional number by performing an interrogation sequence, and when the train operator has finished working with his assigned mobile station, he needs to be able to de-register the functional number.

Relation of the functional number to a Railway Access Code (RAC) and a railway subscriber number would be as follows: functional number = railway access code + railway subscriber number

Normally in a GSM network a calling subscriber uses a mobile station ISDN number of a called subscriber for call set-up purposes. This is used to route a call to a Gateway Mobile Switching Center (GMSC) which interrogates the Home Location Register (HLR) for a routing number. The routing number returned by the home location register is used to route the call through the GSM network to the called subscriber.

The GSM-railway requirement to use a functional number which cannot be used for routing purposes means that the originating switch must somehow use the called functional number to obtain the called users mobile station ISDN number from a central functional register before it can set-up the call. It must also provide the calling functional number to the access matrix for validation.

The GSM-R solutions for allowing railway personnel to register and de-register functional numbers with the follow me functional node have not included any flexibility in the types of registration and de-registration available. Disadvantages of the GSM-R solutions include the fact that there is no way of registering functional numbers for fixed line Directory Numbers (DN). Further, the system does not include any extensibility, such that any future requirement for additional types of registration, interrogation or de-registration procedures would require significant software development.

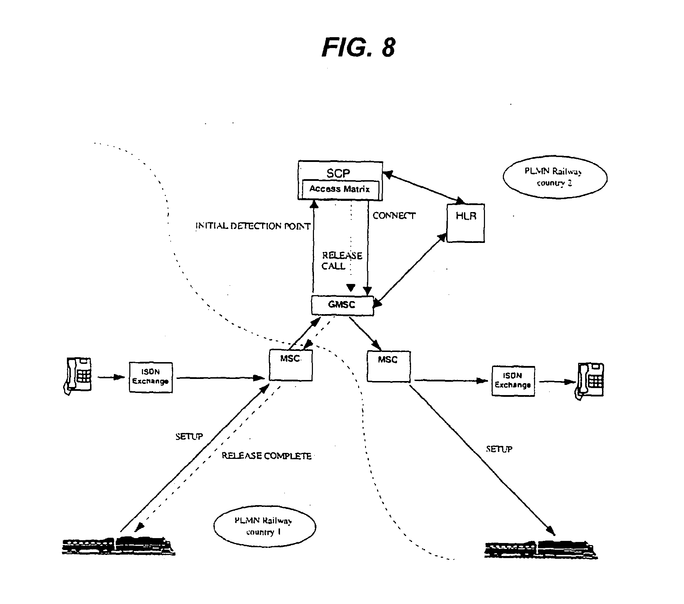

From EP 0 952 744 there is known an architecture which solves the aforementioned problems as to functional numbers. This architecture is shown in Fig. 8. Functional Addressing (FA) is realized by a functional number processing which is based on unstructured supplementary service data (USSD) and call forwarding functionality. As is shown in Fig. 8 an access matrix is located at a Service Control Point (SCP). Transport of functional numbers between an originating switch. i.e., Gateway Mobile Switching Center (GMSC), and the access matrix is triggered on reaching an detection point. However, there is the need that a single numbering scheme is used for functional addressing in the GSM-R network. This single numbering scheme is necessary to unambiguously identify functions/applications associated with an EIRENE user. In other words there is the need to use unique functional numbers.

One essential functional number is for example a train number which is a unique number for each train throughout whole Germany. Thus, functional addressing can be performed easily. However, in other countries, for example Great Britain, the train number is not a unique number throughout whole Great Britain. Thus, problems arising when functional addressing should be performed. Although the train number is mentioned above, there could be also the possibility that other types of functional numbers used are non-unique.

### Disclosure of the Invention

It is therefore the object of the present invention to provide a system and a method which are able to perform non-unique functional number processing during functional addressing or the like in telecommunication applications and especially wireless mobile telecommunication applications in an automated manner.

As to the system this object is solved by the subject matter of claims 1 and 21 and as to the method this object is solved by the subject matter of claim 11.

Further advantageous modifications of the present invention are defined in the dependent claims.

In more detail, according to a first aspect of the present invention there is provided a system for non-unique functional number processing in telecommunication applications, comprising a network node having a database for storing predetermined non-unique functional numbers, and an external data base for storing non-unique functional numbers in connection with uniqueness codes to thereby form unique functional numbers comprising the non-unique functional numbers and the uniqueness code, wherein validation of a registration request at the network node is performed only if the functional number contained in the registration request corresponds to one of the predetermined functional numbers stored in the network node and if a combination of a uniqueness code contained in the registration request is associated with the functional number and if the functional number is not already stored in the database of the network node and does not correspond to one of the unique functional numbers stored in the external database.

According to an embodiment of the present invention registration is performed such that a telephone number of a user originating a valid registration request is stored in the database of the network node in combination with one of the predetermined functional numbers stored in the database of this network node and in combination with the uniqueness code stored in the external database and the stored functional number corresponds to the functional number and the uniqueness code of the valid registration request.

According to a further embodiment of the present invention registration is performed such that one of the predetermined functional numbers stored in the database of the network node and corresponding to the functional number of the valid external registration request and the uniqueness code stored in the external database and corresponding to the uniqueness code contained in the valid registration request and associated with the functional number are stored in a terminal of a user.

According to a further embodiment of the present invention registration is performed such the telephone number of the user originating the valid registration request is stored in the external database in combination with one of the functional numbers stored in the external database and corresponding to the functional number of the valid registration request and in combination with the uniqueness code stored in the external database and corresponding to the uniqueness code contained in the valid registration request and associated with the functional number.

According to a further embodiment of the present invention de-registration is performed such that the telephone number of a user previously originating a valid registration request stored in combination with one of the predetermined functional numbers stored in the database of the network node and corresponding to the functional number of the valid registration request and the uniqueness code stored in the external database and corresponding to the uniqueness code contained in the valid registration request and associated with the functional number in the database of the network node are deleted or marked as inactive.

According to a further embodiment of the present invention de-registration is performed such that one of the predetermined functional numbers stored in the database of the network node and corresponding to the functional number of the valid registration request and the uniqueness code stored in the external database and corresponding to the uniqueness code contained in the valid registration request and associated with the functional number in a terminal of the user are deleted or marked as inactive.

According to a further embodiment of the present invention de-registration is performed such that the telephone number of the user previously originating the valid registration request stored in combination with one of the functional numbers stored in the external database and corresponding to the functional number of the valid registration request and the uniqueness code stored in the external database and corresponding to the uniqueness code contained in the valid registration request and associated with the functional number in the external database are deleted or marked as inactive.

According to a further embodiment of the present invention in case the external database is not available during the time of de-registration de-registration is permitted and a dedicated event record is generated to allow at a later time to synchronize the external database with at least one of the database of the network node or the terminal of the user.

According to a further embodiment of the present invention functional addressing is performed such that it is determined whether or not an incoming functional number is a unique functional number comprising a uniqueness code, and in case the incoming functional number is a unique functional number comprising a uniqueness code which corresponds to one of unique functional numbers stored in the database of the network node and comprising one of the predetermined functional numbers in connection with a uniqueness code calling a terminal of a user whose telephone number is associated with the corresponding unique functional number in the database of the network node.

According to a further embodiment of the present invention the telecommunication applications are wireless telecommunication applications such as GSM/GSM-R and GSM/GSM-R derivative applications.

According to a second aspect of the present invention a method for non-unique functional number processing in telecommunication applications comprises the steps of storing predetermined non-unique functional numbers in a database, storing non-unique functional numbers in connection with uniqueness codes in an external database to thereby form unique functional numbers comprising the non-unique functional numbers and the uniqueness code, and performing validation of a registration request at the network node only if a functional number contained in the external request corresponds to one of the predetermined functional numbers stored in the database and if a combination of a uniqueness code contained in the registration request and associated with the functional number and if the functional number is not already stored in the database and does not correspond to one of the unique functional numbers stored in the external database.

According to an embodiment of the present invention the method comprises the step of performing registration such that a telephone number of a user originating a valid registration request is stored in the database in combination with one of the predetermined functional numbers stored in the database and corresponding to the functional number of the valid registration request and in combination with the uniqueness code stored in the external database and corresponding to the uniqueness code contained in the valid registration request and associated with the functional number.

According to a further embodiment of the present invention the method comprises the step of performing registration such that one of the predetermined functional numbers stored in the database and corresponding to the functional number of the valid registration request and the uniqueness code stored in the external database and corresponding to the uniqueness code contained in the valid registration request and associated with the functional number is stored in a terminal of a user.

According to a further embodiment of the present invention the method comprises the step of performing registration such the telephone number of the user originating the valid registration request is stored in the external database in combination with one of the functional numbers stored in the external database and corresponding to the functional number of the valid external registration request and in combination with the uniqueness code stored in the external database and corresponding to the uniqueness code contained in the valid external registration request and associated with the external functional number .

According to a further embodiment of the present invention the method comprises de-registration such that the telephone number of a user previously originating a valid external registration request stored in combination with one of the predetermined functional numbers stored in the database and corresponding to the functional number of the valid registration request and the uniqueness code stored in the external database and corresponding to the uniqueness code contained in the valid external registration request and associated with the functional number in the database are deleted or marked as inactive.

According to a further embodiment of the present invention the method comprises the step of de-registration such that one of the predetermined functional numbers stored in the database and corresponding to the functional number of the valid registration request and the uniqueness code stored in the external database and corresponding to the uniqueness code contained in the valid registration request and associated with the functional number in a terminal of the user are deleted or marked as inactive.

According to a further embodiment of the present invention the method comprises the step of performing de-registration such that the telephone number of the user previously originating the valid registration request stored in combination with one of the functional numbers stored in the external database and corresponding to the functional number of the valid registration request and the uniqueness code stored in the external database and corresponding to the uniqueness code contained in the valid registration request and associated with the functional number in the external database are deleted or marked as inactive.

According to a further embodiment of the present invention in case the external database is not available during the time of de-registration de-registration is permitted and a dedicated event record is generated to allow at a later time to synchronize the external database with at least one of the database of the network node or the terminal of the user.

According to a further embodiment of the present invention the method comprises the step of performing functional addressing such that it is determined whether or not an incoming functional number is a unique functional number comprising a uniqueness code, and in case the incoming functional number is a unique functional number comprising a uniqueness code which corresponds to one of unique functional numbers stored in the database and comprising one of the predetermined functional numbers in connection with a uniqueness code calling a terminal of a user whose telephone number is associated to the corresponding unique functional number in the database of the network node.

According to a further embodiment of the present invention the telecommunication applications are wireless telecommunication applications such as GSM/GSM-R and GSM/GSM-R derivative applications.

According to a third aspect of the present invention there is provided a a system for non-unique functional number processing in telecommunication applications, comprising a network node having a database for storing predetermined non-unique functional numbers, an external data base for storing non-unique functional numbers in connection with uniqueness codes to thereby form unique functional numbers comprising the non-unique functional numbers and the uniqueness code; and means for performing validation of a registration request at the network node only if the functional number contained in the registration request corresponds to one of the predetermined functional numbers stored in the network node and if a combination of a uniqueness code contained in the registration request is associated with the functional number and if the functional number is not already stored in the database of the network node and does not correspond to one of the unique functional numbers stored in the external database.

According to an embodiment of the present invention the system comprises means for performing registration such that a telephone number of a user originating a valid registration request is stored in the database of the network node in combination with one of the predetermined functional numbers stored in the database of this network node and in combination with the uniqueness code stored in the external database and the stored functional number corresponds to the functional number and the uniqueness code of the valid registration request.

According to a further embodiment of the present invention the means for performing registration is further adapted such that registration is performed such that one of the predetermined functional numbers stored in the database of the network node and corresponding to the functional number of the valid external registration request and the uniqueness code stored in the external database and corresponding to the uniqueness code contained in the valid registration request and associated with the functional number are stored in a terminal of a user.

According to a further embodiment of the present invention the means for performing registration is further adapted such that registration is performed such that the telephone number of the user originating the valid registration request is stored in the external database in combination with one of the functional numbers stored in the external database and corresponding to the functional number of the valid registration request and in combination with the uniqueness code stored in the external database and corresponding to the uniqueness code contained in the valid registration request and associated with the functional number.

According to a further embodiment of the present invention the system comprises means for performing de-registration such that the telephone number of a user previously originating a valid registration request stored in combination with one of the predetermined functional numbers stored in the database of the network node and corresponding to the functional number of the valid registration request and the uniqueness code stored in the external database and corresponding to the uniqueness code contained in the valid registration request and associated with the functional number in the database of the network node are deleted or marked as inactive.

According to a further embodiment of the present invention the means for performing de-registration is further adapted such that de-registration is performed such that one of the predetermined functional numbers stored in the database of the network node and corresponding to the functional number of the valid registration request and the uniqueness code stored in the external database and corresponding to the uniqueness code contained in the valid registration request and associated with the functional number in a terminal of the user are deleted or marked as inactive.

According to a further embodiment of the present invention the means for performing de-registration is further adapted such that de-registration is performed such that the telephone number of the user previously originating the valid registration request stored in combination with one of the functional numbers stored in the external database and corresponding to the functional number of the valid registration request and the uniqueness code stored in the external database and corresponding to the uniqueness code contained in the valid registration request and associated with the functional number in the external database are deleted or marked as inactive.

According to a further embodiment of the present invention the system comprises means for permitting de-registration in case the external database is not available during the time of de-registration and for generating a dedicated event record to allow at a later time to synchronize the external database with at least one of the database of the network node or the terminal of the user.

According to a further embodiment of the present invention the system comprises means for performing functional addressing such that it is determined whether or not an incoming functional number is a unique functional number comprising a uniqueness code, and in case the incoming functional number is a unique functional number comprising a uniqueness code which corresponds to one of unique functional numbers stored in the database of the network node and comprising one of the predetermined functional numbers in connection with a uniqueness code calling a terminal of a user whose telephone number is associated with the corresponding unique functional number in the database of the network node.

According to a further embodiment of the present invention the telecommunication applications are wireless telecommunication applications such as GSM/GSM-R and GSM/GSM-R derivative applications.

Other embodiments and advantages are described in the detailed description below. This summary does not purport to define the invention. The invention is defined by the claims.

### Brief Description of the Drawings

The accompanying drawings, where like reference numerals indicate like components, illustrate an implementation and an embodiment of the present invention.
Fig. 1 is a representation of a central data scheme of Functional Addressing (FA) according to an embodiment of the present invention;
Fig. 2 is a representation of database entries according to the embodiment of the present invention;
Fig. 3A is a flow chart of a first part of a registration logic flow according to the embodiment of the present invention;
Fig. 3B is a flow chart of a second part of a registration logic flow according to the embodiment of the present invention;
Fig. 4 is a presentation of a first registration message flow to an external database according to the embodiment of the present invention;
Fig. 5 is a presentation of a second registration message flow to an external database according to the embodiment of the present invention;
Fig. 6 is a presentation of a third registration message flow to an external database according to the embodiment of the present invention;
Fig. 7 is a presentation of a de-registration message flow to an external database according to the embodiment of the present invention; and
Fig. 8 is a schematic diagram of the functional architecture of a GSM-R network according to the prior art.

Best Mode for carrying out the present Invention.

Although the embodiment of the present invention is directed to a GSM-R application it should be noted that the present invention is applicable to all telecommunication systems and especially wireless mobile telecommunication systems such as GSM/GSM-R and GSM/GSM-R derivative systems.

Furthermore, since the GSM-R system is known to the man having ordinary skill in the art the overall structure of this system is not described here and merely differences to the commonly known GSM-R system are described below in further detail. As to further information about GSM-R it is referred to http://eirene.uic.asso.fr/ where more documentation is available online. It should be noted that the GSM-R system is similar to the GSM-R system shown in Fig. 8 except for an external database which is additionally provided as will be described hereinafter. Therefore, a description of the detailed structure of the GSM-R system is omitted here for the sake of brevity.

In the following different Call Types 1 to 6 (CT1 to CT6) are mentioned, where CT1 is reserved for short codes, CT2 is used for Train Function Numbers (TRN), CT3 is used for Engine Function Numbers (FN), CT4 is used for Coach Numbers (CN) and CT6 is used for maintenance and shunting team members.

As will be shown below in further detail, according to an embodiment of the present invention the following functional units are used to perform nun-unique functional number processing: registration, de-registration, Functional Addressing (FA), and interrogation.

After describing the central data scheme, each of the above functional units will be outlined hereinafter.

It has been found by the inventors of the present invention that so-called uniqueness codes (UC) can be added to non-unique functional numbers (FN) such as Train Running Numbers (TRNs) to form unique functional numbers each comprising a non-unique functional number and a uniqueness code.

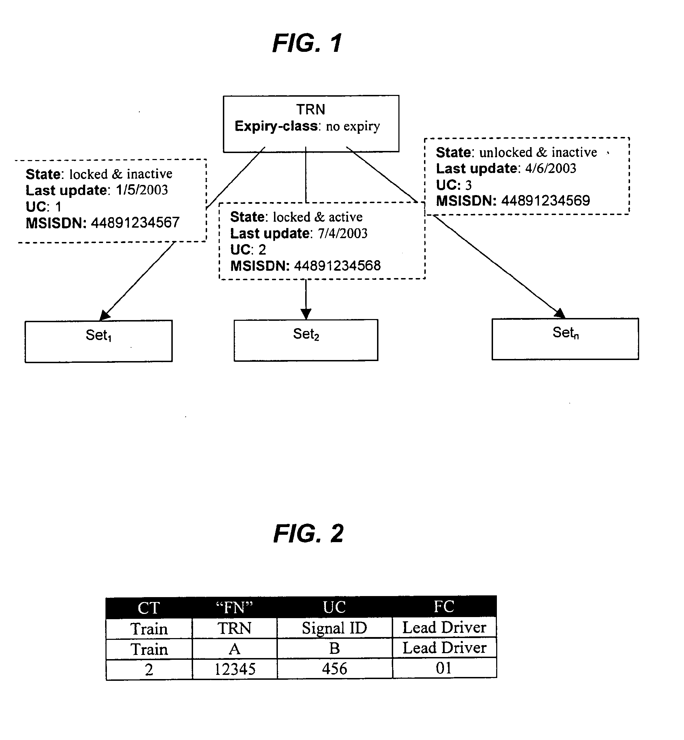

Fig. 1 is a representation of the central data scheme of functional addressing according to the embodiment of the present invention.

The central data scheme of the conventional functional addressing service is implemented by a table called Follow Me Functional Number Mobile Station Integrated Services Digital Network (FM_FNMSISDN). This table currently assigns a single MSISDN to a single functional number in a relation of 1:1. However, using such relation of 1:1 does not allow the use of non-unique functional numbers.

In order to be able to introduce non-unique functional numbers such as non-unique train running numbers and to allow one or more MSISDNs per one non-unique functional number, this data scheme needs to be enhanced to a relation of 1:n. As is shown in Fig. 1, for example three different MISDNs are assigned to one non-unique train running number using different uniqueness codes 1 to 3. Each MSISDN has three parameters describing its current condition: "state", "last update", and "expiry class".

As mentioned above, the existing implementation does not allow the association of more than one MSISDN to a functional number. The introduction of repeat-blocks or multiple entries for non-unique functional numbers to the existing table FM_FNISDN to overcome this problem would create migration problems for existing customers. Therefore, the following solution is implemented.

All functional numbers are split up into two tables. The existing table FN_MSISDN is used only for call types other than 2 and for call type 2 if a enhanced functional number processing feature is disabled. A new second table is used only if the enhanced functional number processing feature is enabled and the new second table contains all non-unique train running numbers of call type 2. This means that the non-unique train running numbers are pre-provisioned, i.e., provided in advance by the 3rd Generation Partnership Project (3GPP).

Fig. 2 is a representation of database entries according to the embodiment of the present invention. The databases in which such database entries are stored will be described later in more detail.

As is shown in Fig. 2, each database entry comprises the Call Type CT, the non-unique Functional Number ("FN"), the Uniqueness Code (CU) and a Function Code (FC). Although it is not shown in Fig. 2 a Railway Access Code (RAC) precedes the call type. This railway access code identifies a specific railway network similar to the country code in a normal telephone network.

The non-unique functional number and the uniqueness code together constitute the unique functional number This means that, as shown in Fig. 2, the unique functional number comprises two parts A (non-unique functional number) and B (uniqueness code).

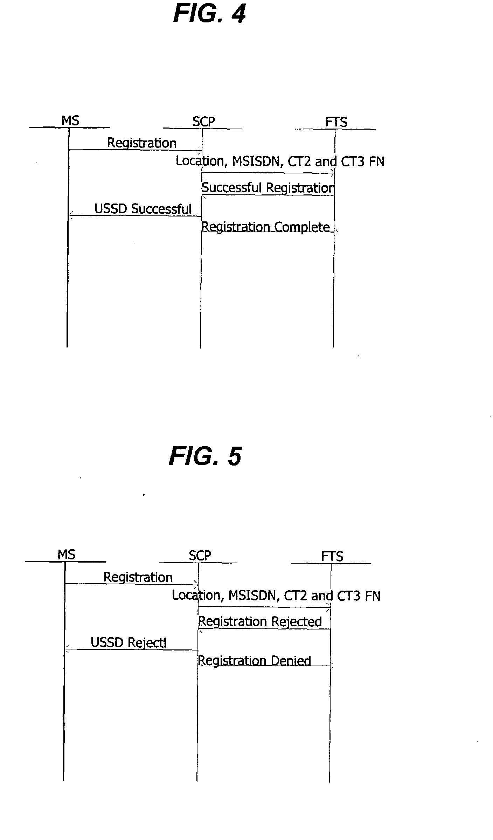

As is obvious from Figs. 4 to 7 the non-unique functional number processing is performed through interactions between a Mobile Station (MS), a Service Control Point (SCP) and a Fixed Terminal Station (FTS). At the service control point the table FN_MSISDN and the second new table are stored in a database. This database is also called "database of a network node". An external database at the fixed terminal station is used for validation of functional numbers. This means that this external database will ensure that the user that wants to register a functional number is allowed to perform this operation for a specific non-unique functional number such as a non-unique train running number. The external database is ensuring the "uniqueness" validity of the functional numbers by validating a uniqueness code added to the non-unique functional number whatever algorithm is used.

All of the aforementioned databases store the database entries in the manner shown in Fig. 2 and mentioned above.

According to the embodiment of the present invention the following requirements must be fulfilled. All of the call type, the non-unique functional number (part A) and the function code are provisioned, i.e., data filled, at the service control point to make them available for registration/de-registration. To each of the aforementioned sets of data there must be filled data corresponding to a maximum number of uniqueness codes (part B) they can be assigned to. In the embodiment of the present invention the maximum number is for example 100. Therefore, only the maximum number of uniqueness codes is defined at the service control point. It is not necessary to provide each individual uniqueness code at the service control point. The length of the non-unique functional numbers and the uniqueness codes are fixed on a per railway access code basis. For example non-unique functional numbers are always 5 digits and uniqueness codes are always 3 digits for the same railway access code (number length excluding call type and function code). In addition, it must be ensured that the non-unique functional number and the uniqueness code do not exceed the maximum length of 8 digits. If the maximum length exceeds the limit the operation will be rejected as it does not comply with the EIRENE specification.

In the following the functional unit "registration" will be described.

Introducing non-unique functional numbers causes the following problem. In contrast to the existing CT2 functionality, the enhanced functional number processing feature cannot stop MSISDNs from accidentally registering under more than one functional number. The existing unique functional number implementation allows only one MSISDN to be registered for one functional number. Attempts to register a second MSISDN will be rejected based on standard EIRENE behavior. The enhanced functional number processing feature allows multiple MSISDNs per non-unique functional number. Each registration attempt is considered valid and therefore may not be rejected. Without additional information that relates to MSISDNs and functional numbers in a certain way, the registration service has no means of detecting accidental or invalid registration attempts.

This additional information is provided by adding the uniqueness code to the non-unique functional number and by validating it against the external database. If the uniqueness code is based upon a real number such as the signal number where the train is located at the time of the registration then the uniqueness code can be validated.

The external database at the fixed terminal station will be consulted for each incoming registration attempt to verify if the uniqueness code is feasible for this non-unique functional number.

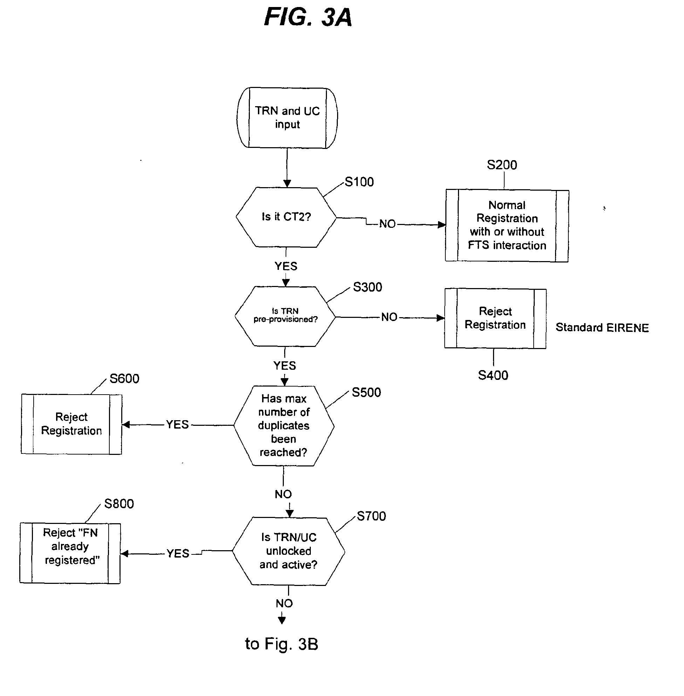

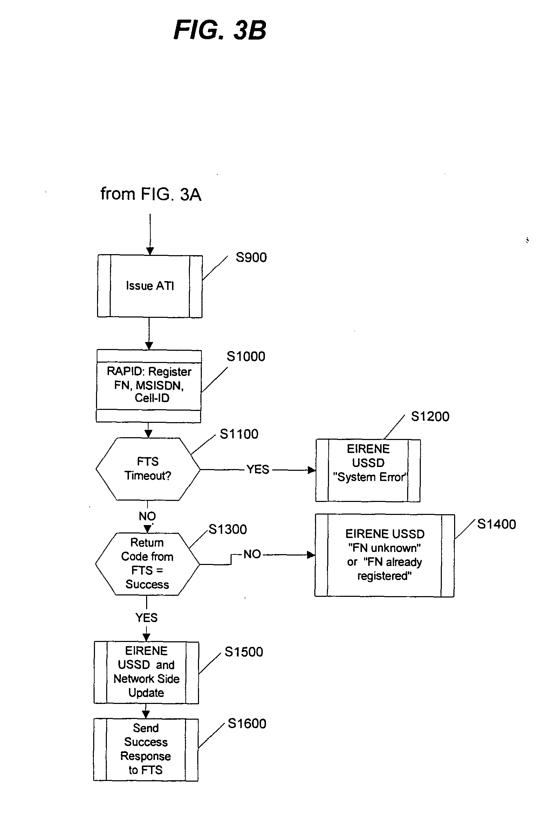

To register a functional number means to associate an MSISDN to a functional number such that a functional addressing call is connected to the MSISDN. The user requesting a registration uses a mobile telephone or the like to send a unstructured supplementary service data string containing the non-unique functional number to register. Additionally the user must enter the uniqueness code for example based on the signal-ID of his current location. For an incoming registration request with call type 2 the logic in Figs. 3A and 3B is executed. In this case the non-unique functional number is the non-unique train running number. However, the same scenario as described below can be applied to each type of non-unique functional numbers.

Figs. 3A and 3B are flow charts of a registration logic flow according to the embodiment of the present invention and Figs. 4 to 6 are presentations of registration message flows to an external database according to the embodiment of the present invention which should be viewed in connection with the registration logic flow of Figs. 3A and 3B.

In more detail, there is shown a routine which is performed in case a train running number, and a uniqueness code are input.

In a step S100 there is checked whether or not a registration request is made for a call type 2. If the answer in the step S100 is "NO" the procedure proceeds to a step S200 where normal registration with or without an interaction with the external database of the fixed terminal station is performed.

If the answer in the step S100 is "YES" the procedure proceeds to a step S300 where it is checked whether or not the train running number is provided in advance, i.e. is pre-provisioned. If the answer in the step S300 is "NO" the procedure proceeds to a step S400 where the registration is rejected and a standard EIRENE reject procedure is performed. This means that all train running numbers without uniqueness code must be pre-provisioned at the database of the service control point.

If the answer in the step S300 is "YES" the procedure proceeds to a step S500 where it is checked whether or not a maximum number of duplicates, i.e., a maximum number of uniqueness codes, of the train running number has already been reached. If the maximum number of uniqueness codes has already been reached, the procedure proceeds to a step 600 where the registration is rejected. If the maximum number of uniqueness codes has not been reached the procedure proceeds to a step S700 where it is checked whether the combination of the train running number and the uniqueness code is unlocked and active, i.e., is already active or already registered. If the answer in the step S700 is "YES" the procedure proceeds to a step S800 where the registration is rejected because the unique functional number comprising the train running number and the uniqueness code is already registered.

If the answer in the step S700 is "NO" the procedure proceeds to a step S900 (Fig. 3B) where the uniqueness code is removed from the unique functional number to get the real train running number. This train running number is then validated within the data base at the service control point, i.e., it is registered and has the maximum number of multiple registrations being reached. Then, in the step S900 the service control point determines the location of the subscriber trying to register by issuing an any time interrogation (ATI) message to a home location register (HLR). It should be noted that if the any time interrogation message fails/times-out the registration request is rejected although this is not explicitly shown in Fig. 3B for the sake of clarity. Otherwise, the procedure proceeds to a step S1000.

In the step S1000 once a location information of the subscriber trying to register has been retrieved the service control point will send a Transmission Control Protocol/Internet Protocol (TCP/IP) query using a Railway Application Part (RAPID) protocol which is an internet protocol interface to the external database. The external database communication from the service control point is used to validate the consistency of the registration request. In the request the service control point will send the complete unique functional number, the mobile station ISDN, a call type 3 functional number of the engine being in front of the train and a Cell-ID the user is located in.

In the step S1100 it is checked whether or not the external database at the fixed terminal station times-out or not, i.e., provides a response in a sufficient time. If the answer in the step S1100 is "YES" the procedure proceeds to a step S1200 where an EIRENE unstructured supplementary service data system error is outputted and the request is rejected.

If the answer in the step S1100 is "NO", i.e., a response has been received in time the procedure proceeds to a step S1300 where it is checked whether or not a registration attempt is permitted by the external database. This means that it is checked whether or not the functional number is not already registered at the external database of the fixed terminal station or is known. If the answer in the step S1300 is "NO" the procedure proceeds to a step S1400 where an EIRENE unstructured supplementary service data message is outputted that the functional number is unknown or already registered.

If the answer in the step S1300 is "YES" which means that the registration attempt is permitted by the external database of the fixed terminal station a return code is given from the fixed terminal station to the service control point showing success of the registration attempt. Then, the procedure proceeds to a step S1500 where the database at the service control point is updated with the train running number, the uniqueness code and the mobile station ISDN number. Furthermore, an unstructured supplementary service data response is sent to the requesting user to confirm the registration. Consequently, the unique functional number of the user at the service control point and at the mobile terminal of the user has the format call type + (train running number + uniqueness code) + function code being preceded by the railway access code and this is compliant with the EIRENE standards.

Finally, after successful registration and update the procedure proceeds to a step S1600 where a success response is sent to the external database of the fixed terminal station. Thereafter, the registration procedure is completed.

Therefore, any additional registration attempt from the same user to his functional number is handled without interactions to the external database, i.e., only the timestamp at the service control point is updated.

It should be noted that registrations to functional numbers other than call type 2 are handled as within the existing implementation. Nevertheless, validation with an external database and the provisioning notification via a railway application part are provided as an option for those functional numbers on a per railway access code basis.

As to the message flows in Figs. 4 to 6 it should be noted that these are the same for other call types. The only exception is that for those call types such as call type 6 no location information and no call type 3 functional number is send to the fixed terminal station. This means only the requested functional number and the associated mobile station ISDN number are send.

In addition, the external database at the fixed terminal station is not available there is the possibility that the request is rejected or that the request continues on the service control point without performing the query to the external database at the fixed terminal station. In the later case a dedicated event record is generated which will allow a later propagation of the registration to the external database at the fixed terminal station.

In the following the functional unit "de-registration" will be described.

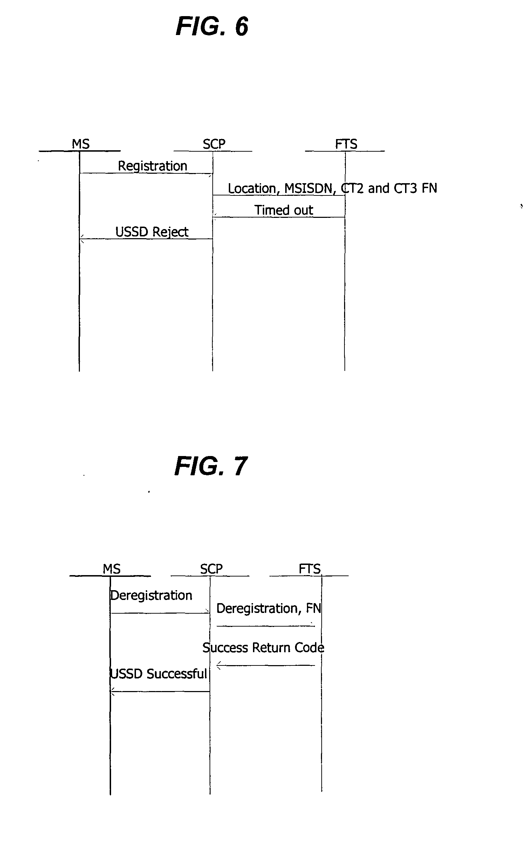

Fig. 7 is a presentation of a de-registration message flow to an external database according to the embodiment of the present invention.

De-registration means to deactivate an existing association between a functional number and a mobile station ISDN number such that a call to a functional number will no longer be connected to the mobile station ISDN. The user requesting a de-registration uses a mobile terminal to send an EIRENE standard unstructured supplementary service data string containing the functional number and the mobile station ISDN number to de-register. As the mobile terminal doing the de-registration is the one originally registered to the train running number and the uniqueness code any de-registration request will contain a unique functional number and therefore the de-registration is handled in a similar manner as in any other conventional de-registration scheme.

The only additional feature done within this de-registration scheme is that,the external database at the fixed terminal station gets notified about the de-registration. Once a de-registration is confirmed from the fixed terminal station the mobile terminal of the user is notified via a standard EIRENE unstructured supplementary service data response about the successful de-registration. In the case an error response or no response is received the service control point provides similar options like for registrations, i.e., continue with de-registration or reject the attempt.

In the case the external database at the fixed terminal station is unavailable the de-registration attempt is permitted and a dedicated event record is generated to allow at a later time to synchronize the systems, i.e., the mobile terminal of the user, the database at the service control point and the external database at the fixed terminal station.

A forced de-registration is a request to de-register a mobile station ISDN number other than that of the mobile terminal initiating the forced de-registration from a certain functional number. The forced de-registration can only be requested by a supervisor and is sent via an EIRENE standard unstructured supplementary service data message containing the mobile station ISDN number of the sender and the functional number and mobile station ISDN number to de-register. Because the request explicitly specifies the mobile station ISDN number to be de-registered, the request can be executed without further information. The logic for the forced de-registration is therefore the same as in the existing EIRENE compliant implementation and is therefore not shown here. Once a forced de-registration is done the external database at the fixed terminal station is informed about the de-registration. This is the same message flow as shown above for the de-registration.

In the case the external database at the fixed terminal station is unavailable the de-registration attempt is permitted and a dedicated event record is generated to allow at a later time to synchronize the systems, i.e., the mobile terminal of the user, the database at the service control point and the external database at the fixed terminal station.

In the following the functional unit "functional addressing" will be described.

The purpose of functional addressing is to use a functional address, as opposed to a personal network address such as the mobile station ISDN number in order to reach a person with a specific role in the railway operation. The caller dials an encoded functional number to connect to a certain function like the driver of a certain train. The functional number-to-mobile station ISDN number mapping is stored in the table FM_FNMSISDN, which is queried by the functional addressing service during a functional addressing call. The table must be pre-provisioned but the state of each mapping in the table can be altered by the aforementioned registration and de-registration operations. During a functional addressing call, the functional addressing service looks up the incoming functional number and connects the functional addressing caller to the mobile station ISDN number if it is active and not expired.

Non-unique train running numbers can have more than one mobile station ISDN numbers assigned as described above. Therefore, the functional addressing service requires more sophisticated logic than a simple table-lookup. To select one out of several mobile station ISDN numbers it is required to connect an additional selection criterion, i.e., the uniqueness code.

If a user is aware of the uniqueness code, for example a dispatcher should have this information due to his access to the external database, it should be included when dialing the functional number of the user.

If the dialed functional number includes the uniqueness code, which is determined by the service control point based on the length of the called functional number, then the service control point can connect the call to the mobile station ISDN number associated to this functional number.

In the case that only the train running number without the uniqueness code is dialed an additional logic on the service control point is required. If the train running number is unique or there is only one mobile station ISDN number currently registered to it the service control point is providing an option on a per railway access code basis that allows connecting the call to the mobile station ISDN number.

If the train running number is non-unique the service control point is unable to resolve the ambiguity and it will simply release the call with a dedicated release cause value and an optional short message that instructs the caller to call a dispatcher.

As is obvious from the aforementioned description of the embodiment of the present invention the enhanced functional number processing feature is for railway operators wishing to carry out additional infrastructure processing of functional numbers during registration. Specifically this processing is to permit: registration details to be passed to an external system for verification that the registration request is valid; successful completion of the registration process only when confirmation is received from the external system that the registration request is valid; an EIRENE functional number to be split and processed in two parts within the service control point; and provisioning of the second part of the functional number at registration, i.e., only the first part of the number is pre-provisioned.

Two-part processing of the EIRENE functional number provides the capability to pre-provision the first part of the functional number only, to thereby overcome database restrictions on the pre-provisioning of all possible 8-digit functional numbers. For example the two elements of the EIRENE functional number will correspond to the alphanumeric headcode of the train and the signal number where the train is starting its journey.

Although the present invention has been described in connection with a certain embodiment for illustrative purposes, the present invention is not limited thereto. Accordingly, various modifications, adaptations, and combinations of various features of the described embodiment of the present invention can be practiced without departing from the scope of the present invention as set forth in the claims.

## Claims

1. System for non-unique functional number processing in telecommunication applications, comprising:
a network node having a database for storing predetermined non-unique functional numbers; and
an external data base for storing non-unique functional numbers in connection with uniqueness codes to thereby form unique functional numbers comprising the non-unique functional numbers and the uniqueness code, wherein
validation of a registration request at the network node is performed only if the functional number contained in the registration request corresponds to one of the predetermined functional numbers stored in the network node and if a combination of a uniqueness code contained in the registration request is associated with the functional number and if the functional number is not already stored in the database of the network node and does not correspond to one of the unique functional numbers stored in the external database.

2. System according to claim 1, wherein registration is performed such that a telephone number of a user originating a valid registration request is stored in the database of the network node in combination with one of the predetermined functional numbers stored in the database of this network node and in combination with the uniqueness code stored in the external database and the stored functional number corresponds to the functional number and the uniqueness code of the valid registration request.

3. System according to claim 2, wherein registration is performed such that one of the predetermined functional numbers stored in the database of the network node and corresponding to the functional number of the valid external registration request and the uniqueness code stored in the external database and corresponding to the uniqueness code contained in the valid registration request and associated with the functional number are stored in a terminal of a user.

4. System according to claim 3, wherein registration is performed such that the telephone number of the user originating the valid registration request is stored in the external database in combination with one of the functional numbers stored in the external database and corresponding to the functional number of the valid registration request and in combination with the uniqueness code stored in the external database and corresponding to the uniqueness code contained in the valid registration request and associated with the functional number.

5. System according to one of the claims 2 to 4, wherein de-registration is performed such that the telephone number of a user previously originating a valid registration request stored in combination with one of the predetermined functional numbers stored in the database of the network node and corresponding to the functional number of the valid registration request and the uniqueness code stored in the external database and corresponding to the uniqueness code contained in the valid registration request and associated with the functional number in the database of the network node are deleted or marked as inactive.

6. System according to claim 5, wherein de-registration is performed such that one of the predetermined functional numbers stored in the database of the network node and corresponding to the functional number of the valid registration request and the uniqueness code stored in the external database and corresponding to the uniqueness code contained in the valid registration request and associated with the functional number in a terminal of the user are deleted or marked as inactive.

7. System according to claim 6, wherein de-registration is performed such that the telephone number of the user previously originating the valid registration request stored in combination with one of the functional numbers stored in the external database and corresponding to the functional number of the valid registration request and the uniqueness code stored in the external database and corresponding to the uniqueness code contained in the valid registration request and associated with the functional number in the external database are deleted or marked as inactive.

8. System according to claim 7, wherein in case the external database is not available during the time of de-registration de-registration is permitted and a dedicated event record is generated to allow at a later time to synchronize the external database with at least one of the database of the network node or the terminal of the user.

9. System according to one of the claims 1 to 8, wherein functional addressing is performed such that it is determined whether or not an incoming functional number is a unique functional number comprising a uniqueness code, and in case the incoming functional number is a unique functional number comprising a uniqueness code which corresponds to one of unique functional numbers stored in the database of the network node and comprising one of the predetermined functional numbers in connection with a uniqueness code calling a terminal of a user whose telephone number is associated with the corresponding unique functional number in the database of the network node.

10. System according to one of the claims 1 to 9, wherein the telecommunication applications are wireless telecommunication applications such as GSM/GSM-R and GSM/GSM-R derivative applications.

11. Method for non-unique functional number processing in telecommunication applications, comprising the steps of:
storing predetermined non-unique functional numbers in a database;
storing non-unique functional numbers in connection with uniqueness codes in an external database to thereby form unique functional numbers comprising the non-unique functional numbers and the uniqueness code; and
performing validation of a registration request at the network node only if a functional number contained in the external request corresponds to one of the predetermined functional numbers stored in the database and if a combination of a uniqueness code contained in the registration request and associated with the functional number and if the functional number is not already stored in the database and does not correspond to one of the unique functional numbers stored in the external database.

12. Method according to claim 11, comprising the step of performing registration such that a telephone number of a user originating a valid registration request is stored in the database in combination with one of the predetermined functional numbers stored in the database and corresponding to the functional number of the valid registration request and in combination with the uniqueness code stored in the external database and corresponding to the uniqueness code contained in the valid registration request and associated with the functional number.

13. Method according to claim 12, comprising the step of performing registration such that one of the predetermined functional numbers stored in the database and corresponding to the functional number of the valid registration request and the uniqueness code stored in the external database and corresponding to the uniqueness code contained in the valid registration request and associated with the functional number is stored in a terminal of a user.

14. Method according to claim 13, comprising the step of performing registration such the telephone number of the user originating the valid registration request is stored in the external database in combination with one of the functional numbers stored in the external database and corresponding to the functional number of the valid external registration request and in combination with the uniqueness code stored in the external database and corresponding to the uniqueness code contained in the valid external registration request and associated with the external functional number.

15. Method according to one of the claims 12 to 14, comprising the step of performing de-registration such that the telephone number of a user previously originating a valid external registration request stored in combination with one of the predetermined functional numbers stored in the database and corresponding to the functional number of the valid registration request and the uniqueness code stored in the external database and corresponding to the uniqueness code contained in the valid external registration request and associated with the functional number in the database are deleted or marked as inactive.

16. Method according to claim 15, comprising the step of de-registration such that one of the predetermined functional numbers stored in the database and corresponding to the functional number of the valid registration request and the uniqueness code stored in the external database and corresponding to the uniqueness code contained in the valid registration request and associated with the functional number in a terminal of the user are deleted or marked as inactive.

17. Method according to claim 16, comprising the step of performing de-registration such that the telephone number of the user previously originating the valid registration request stored in combination with one of the functional numbers stored in the external database and corresponding to the functional number of the valid registration request and the uniqueness code stored in the external database and corresponding to the uniqueness code contained in the valid registration request and associated with the functional number in the external database are deleted or marked as inactive.

18. Method according to claim 17, wherein in case the external database is not available during the time of de-registration de-registration is permitted and a dedicated event record is generated to allow at a later time to synchronize the external database with at least one of the database of the network node or the terminal of the user.

19. Method according to one of the claims 11 to 18, comprising the step of performing functional addressing such that it is determined whether or not an incoming functional number is a unique functional number comprising a uniqueness code, and in case the incoming functional number is a unique functional number comprising a uniqueness code which corresponds to one of unique functional numbers stored in the database and comprising one of the predetermined functional numbers in connection with a uniqueness code calling a terminal of a user whose telephone number is associated to the corresponding unique functional number in the database of the network node.

20. Method according to one of the claims 11 to 19, wherein the telecommunication applications are wireless telecommunication applications such as GSM/GSM-R and GSM/GSM-R derivative applications.

21. System for non-unique functional number processing in telecommunication applications, comprising:
a network node having a database for storing predetermined non-unique functional numbers;
an external data base for storing non-unique functional numbers in connection with uniqueness codes to thereby form unique functional numbers comprising the non-unique functional numbers and the uniqueness code; and
means for performing validation of a registration request at the network node only if the functional number contained in the registration request corresponds to one of the predetermined functional numbers stored in the network node and if a combination of a uniqueness code contained in the registration request is associated with the functional number and if the functional number is not already stored in the database of the network node and does not correspond to one of the unique functional numbers stored in the external database.

22. System according to claim 21, comprising means for performing registration such that a telephone number of a user originating a valid registration request is stored in the database of the network node in combination with one of the predetermined functional numbers stored in the database of this network node and in combination with the uniqueness code stored in the external database and the stored functional number corresponds to the functional number and the uniqueness code of the valid registration request.

23. System according to claim 22, wherein the means for performing registration is further adapted such that registration is performed such that one of the predetermined functional numbers stored in the database of the network node and corresponding to the functional number of the valid external registration request and the uniqueness code stored in the external database and corresponding to the uniqueness code contained in the valid registration request and associated with the functional number are stored in a terminal of a user.

24. System according to claim 23, wherein the means for performing registration is further adapted such that registration is performed such that the telephone number of the user originating the valid registration request is stored in the external database in combination with one of the functional numbers stored in the external database and corresponding to the functional number of the valid registration request and in combination with the uniqueness code stored in the external database and corresponding to the uniqueness code contained in the valid registration request and associated with the functional number.

25. System according to one of the claims 22 to 24, comprising means for performing de-registration such that the telephone number of a user previously originating a valid registration request stored in combination with one of the predetermined functional numbers stored in the database of the network node and corresponding to the functional number of the valid registration request and the uniqueness code stored in the external database and corresponding to the uniqueness code contained in the valid registration request and associated with the functional number in the database of the network node are deleted or marked as inactive.

26. System according to claim 25, wherein the means for performing de-registration is further adapted such that de-registration is performed such that one of the predetermined functional numbers stored in the database of the network node and corresponding to the functional number of the valid registration request and the uniqueness code stored in the external database and corresponding to the uniqueness code contained in the valid registration request and associated with the functional number in a terminal of the user are deleted or marked as inactive.

27. System according to claim 26, wherein the means for performing de-registration is further adapted such that de-registration is performed such that the telephone number of the user previously originating the valid registration request stored in combination with one of the functional numbers stored in the external database and corresponding to the functional number of the valid registration request and the uniqueness code stored in the external database and corresponding to the uniqueness code contained in the valid registration request and associated with the functional number in the external database are deleted or marked as inactive.

28. System according to claim 27, comprising means for permitting de-registration in case the external database is not available during the time of de-registration and for generating a dedicated event record to allow at a later time to synchronize the external database with at least one of the database of the network node or the terminal of the user.

29. System according to one of the claims 21 to 28, comprising means for performing functional addressing such that it is determined whether or not an incoming functional number is a unique functional number comprising a uniqueness code, and in case the incoming functional number is a unique functional number comprising a uniqueness code which corresponds to one of unique functional numbers stored in the database of the network node and comprising one of the predetermined functional numbers in connection with a uniqueness code calling a terminal of a user whose telephone number is associated with the corresponding unique functional number in the database of the network node.

30. System according to one of the claims 21 to 29, wherein the telecommunication applications are wireless telecommunication applications such as GSM/GSM-R and GSM/GSM-R derivative applications.
